# EUROPEAN PATENT APPLICATION

(11) **EP 1 505 510 A1**
(43) Date of publication of application: **09.02.2005**
(21) Application number: 03747198.4
(22) Date of filing: 29.01.2003
(51) Int. Cl.: G06F 15/00, G06F 12/14, G06F 12/00

(54) **COLLABORATION SERVER, COLLABORATION SYSTEM, SESSION MANAGEMENT METHOD THEREOF, AND PROGRAM**

(30) Priority: 25.04.2002 JP 2002124887
(71) Applicant: International Business Machines Corporation, Armonk, N.Y. 10504 (US)
(72) Inventor: TAKAHASHI, Kohichi, c/o Yamato site, IBM Japan Ltd, Yamato-shi, Kanagawa 242-8502 (JP)
(74) Representative: Williams, Julian David
(86) International application number: PCT/JP2003/000872
(87) International publication number: WO 2003/091889

(57) **Abstract**

Access control in a collaboration system is realized, in which, even when only particular one of users working together has access permission to a resource, the other users are allowed to access the resource under certain conditions.

The collaboration system includes multiple terminals 100 exchanging data through a network to perform collaborative work, and a collaboration server 200 that acquires a resource in response to a request from each terminal 100 and sends the resource to the terminal 100. When an access request for an access-controlled resource is made from a user terminal 100 not having the access permission to the resource, the collaboration server 200 uses access authorization of a session owner to the resource to acquire the resource.

## Description

### Field of the Invention

This invention relates to a collaboration system that lets multiple computers perform collaborative work on common resources through a network.

### Background Art

with the widespread use of computer networks, it has been becoming easier to access data or resources between multiple computers these days. To prevent unauthorized user access to files, databases, and networks, it is common practice to conduct access control that defines the level of access permission (search only, updatable, etc.) to be granted to each user.

Among multiple computers connected through a network, synchronizations of input and output operations and data processing can also be achieved. In other words, a common image is generated on the display screens of the multiple computers, or an input to one computer is reflected on the other computers. Using this technology, a system (hereinbelow, called a "collaboration system") is becoming widespread, which lets each computer generate a common working screen on its display to conduct collaborative work.

Such a collaboration system enables multiple users to access a common resource at the same time. Therefore, when access control is conducted in the collaboration system, all users doing collaborative work must have access permission to the target resource.

As stated above, when access control is conducted in the collaboration system, all the users doing the collaborative work must be authorized to access the target resource in view of system security.

However, even if wanting to do collaborative work on the target resource, some of the users doing the collaborative work may not have the access permission to the resource. For example, there is a case where, as part of CRM (Customer Relationship Management) services, an agent offers a question-and-answer session with each customer while referring to a Web page shared between the customer and agent. In this case, even if only the customer has the access permission to the Web page, it is desirable to enable the agent to browse the Web page during the session.

If in such a case the access authorization could be temporarily granted to the other user not having the access permission to the resource, a flexible, useful collaboration system can be realized.

It is therefore an object of this invention to realize access control in a collaboration system in which, even when only particular one of users working together has access permission to a resource, the other users are allowed to access the resource under certain conditions.

### Disclosure of the Invention

In attaining the above object, the invention is implemented as a collaboration server for supporting collaborative work by multiple terminals exchanging data through a network. The collaboration server includes resource acquiring means for acquiring a resource in response to requests from the terminals and returning it to the requesting terminals, and session management means for managing a collaborative work session by the terminals. In this structure, when receiving in a certain session an acquisition request from any user terminal other than that of a session owner to acquire a resource, the access to which is authorized to only the session owner, the resource acquiring means acquires the resource based on the access authorization of the session owner.

It allows the other user to share the access authorization of the session owner during only the session.

To be more specific, the resource acquiring means acquires the requested resource by adding information, indicative of the access authorization acquired from an access request from the session owner's terminal, to the resource acquiring request from the user terminal other than that of the session owner.

When receiving the resource acquiring request for the resource from the user terminal other than that of the session owner, even if having not yet stored or could not store the information indicating the access authorization acquired from the access request from the session owner's terminal, the resource acquiring means will acquire the resource by letting the session owner's terminal make an access request for the resource.

Another collaboration server of the invention also includes resource acquiring means for acquiring a resource in response to requests from terminals and returning it to the resource requesting terminals, and session management means for managing a collaborative work session by the terminals. In this structure, when receiving in a certain session an access request for an access-controlled resource without authentication information, the resource acquiring means acquires the resource based on information indicating access authorization acquired from another access request for the resource with authentication information.

Still another collaboration server of the invention includes a send/receive controller for acquiring a resource in response to requests from terminals and returning it to the resource requesting terminals, and a session manager for managing a collaborative work session by the terminals. In this structure, when authentication information indicating access authorization is included in an acquisition request from a certain terminal for a particular resource, the send/receive controller stores the authentication information in a predetermined storage device. When no authentication information is included in an acquisition request from another certain terminal for the resource, the send/receive controller adds the stored authentication information to the acquisition request concerned and sends it to a resource server.

To be more specific, the send/receive'controller acquires authentication information from the acquisition request received from a session owner in each session, and stores the authentication information. It allows another user to access the resource in each session under the access authorization of the session owner.

Further, when receiving an acquisition request from any user terminal other than that of the session owner in such a condition that no authentication information is stored, the send/receive controller removes an input request for the authentication information from a response to the acquisition request, and returns it to the sender of the acquisition request. It disables the terminal acquiring the response from inputting the authentication information, but the session owner sends an acquisition request for the resource in the normal course of collaborative activities so that the terminal acquiring the response can acquire the resource. From then on, any user other than the session owner can acquire the resource in a manner based on the access authorization of the session owner.

The invention is also implemented as a collaboration system provided with any one of the aforementioned collaboration servers. The collaboration system includes multiple terminals exchanging data through a network to perform collaborative work, and the collaboration server that acquires a resource in response to requests from the terminals and sends it to each terminal. In this structure, when receiving in a certain session a request to access an access-controlled resource from a terminal not having access permission to the resource, the collaboration server acquires the resource using access authorization of another terminal to the resource.

To be more specific, when receiving a request to access an access-controlled resource from a terminal not having access permission to the resource, the collaboration server acquires the resource by letting another terminal having access permission to the resource make an access request for the resource.

The invention is further implemented as a session management method for such a collaboration server to support collaborative work by multiple terminals exchanging data through a network. The session management method includes a step of adding prestored authentication information to an acquisition request for a particular resource from a certain terminal when no authentication information indicating access authorization is included in the acquisition request, a step of sending a target resource server the received acquisition request or authentication information-added acquisition request and acquiring a response, and a step of returning the acquired response to the terminal as the sender of the acquisition request.

More preferably, the session management method further includes a step of acquiring authentication information from an acquisition request received from the terminal of a session owner in the collaborative work session and storing it in a predetermined storage device.

Furthermore, it may include a step of removing an input request for information indicating access authorization (that is, a WWW-Authenticate header) from the response prior to returning the response when the contents of the response contain information indicating that the resource is access-controlled (that is, a status code 401).

The invention can also be implemented as a program for letting a computer function as any one of the aforementioned collaboration servers and execute processing corresponding to each step in the aforementioned session method. The program can be distributed in a stored form, such as a magnetic disk, optical disk, semiconductor memory, or any other storage device, or delivered through a network.

### Brief Description of the Drawings

Fig. 1 is a block diagram for explaining an exemplary configuration of a network system to which a collaboration system according to an embodiment is applied.
Fig. 2 is a block diagram showing the general structure of the collaboration system according to the embodiment constructed using the network system shown in Fig. 1.
Fig. 3 is an illustration showing configurations of cache tables and UAI table used for session management by a session management part.
Fig. 4 is a flowchart for explaining the operation of the collaboration server in the embodiment when the collaboration server honors an acquisition request and returns an HTTP response.
Fig. 5 is a flowchart for explaining the operation of the collaboration server in the embodiment when the collaboration server accesses a Web server.
Fig. 6 shows an example of the display screen on a customer terminal when receiving a status code 401.
Fig. 7 shows an example of the display screen on an agent terminal when receiving the status code 401.
Best Mode for Carrying Out the Invention

The invention will now be described in detail based on an embodiment illustrated in the accompanying drawings.

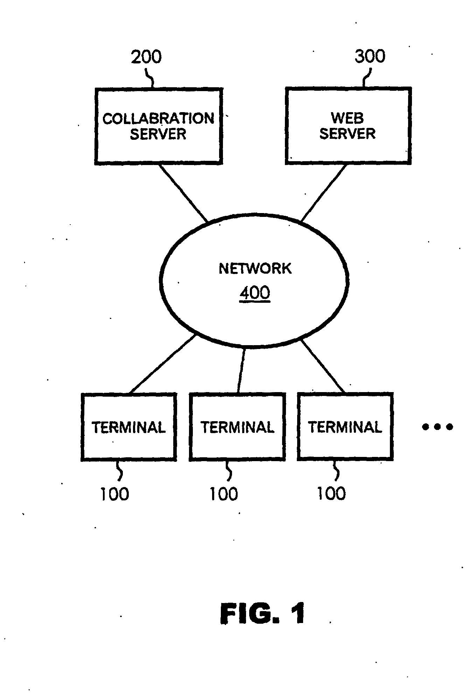

Fig. 1 is a block diagram for explaining an exemplary configuration of a network system to which a collaboration system according to the embodiment is applied.

As shown in Fig. 1, this network system includes terminals 100 on which multiple users do collaborative work, a collaboration server 200 supporting the Web-based collaborative work by the terminals 100, and a Web server 300 providing Web contents as a target resource in the collaborative work. The collaboration server 200, the terminals 100, and the Web server 300 may be computers with network capabilities, such as workstations or personal computers, which can exchange data through a network 400. The network 400 may be the Internet, any other Web-based WAN (Wide Area Network) or LAN (Local Area Network), or the like, with wired or wireless transmission channels.

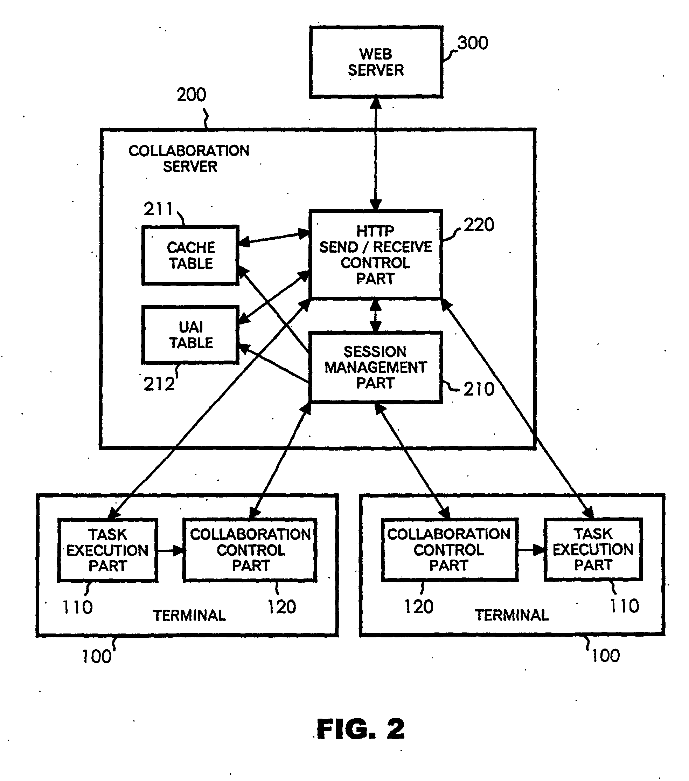

Fig. 2 is a block diagram showing the general structure of a collaboration system according to the embodiment constructed using the network system shown in Fig. 1. In the embodiment, a description will be made below of a collaboration system used when a customer and an agent work together while browsing a common Web page.

Referring to Fig. 2, in the collaboration system of the embodiment, the terminals 100 perform collaborative work under the control of the collaboration server 200 (this collaborative work is called the "session" below). In the session, the terminals 100 access the Web server 300 through the collaboration server 200 to acquire a target Web page (contents).

In Fig. 2, two terminals 100 are shown as corresponding to the customer and the agent, but three or more terminals may be practically connected together. In the following description, if it is necessary to differentiate between the terminal 100 for the customer and the terminal 100 for the agent, alphabetical letters are appended as suffixes like customer terminal 100a and agent terminal 100b. Otherwise, if not necessary to differentiate between them, they are simply mentioned as terminals 100. Similar considerations apply to structural elements of each terminal 100 (such as browser and client program to be described later).

Though not particularly shown here, the terminal 100 implemented by a computer system has appropriate hardware. The hardware includes a CPU (Central Processing Unit) performing data processing under program control, and a storage device, such as a main memory or magnetic disk drive, storing the program for control of the CPU and various data. It also includes a display device as output means such as an LCD (Liquid Crystal Display) or CRT display, input devices such as a keyboard and a mouse, and a network interface for connection through the network 400 to the other terminal 100, the collaboration server 200, and the Web server 300.

As shown in Fig. 2, the terminal 100 further includes a task execution part 110 and a collaboration control part 120 as functions for realizing a Web-based collaborative session.

The task execution part 110 is a virtual software block executed by the CPU under program control. The task execution part 110 accesses the Web server 300 on the network 400 to acquire a required Web page, shows the Web page on the screen of the display device, and reflects input device operations on the Web page (such as input into or scrolling of an input form, a change of displayed page, and writing of annotations). Software implementing the task execution part 110 can be a browser such as Microsoft Internet Explorer or Netscape Navigator from Netscape Communications Corp.

The collaboration control part 120 is also a virtual software block executed by the CPU under program control, and synchronizes operations performed on the Web page by the task execution part 110 between the terminals 100 working in the session. The collaboration control part 120 can be implemented using a client program of existing collaboration system. The client program may be preinstalled by the user in the computer of the terminal 100, or provided in the form of a Java applet and downloaded from the collaboration server 200 when the collaborative session starts.

Though not particularly shown here, the collaboration server 200 has appropriate hardware. The hardware includes a CPU (Central Processing Unit) performing data processing under program control; a storage device, such as a main memory or magnetic disk drive, storing the program for control of the CPU and various data including Web pages; and a network interface for connection to the terminals 100 through the network 400.

As shown in Fig. 2, the collaboration server 200 also includes a session management part 210 for managing a collaborative session by the terminals 100, and an HTTP send/receive control part 220 as resource acquiring means that arbitrates between the terminals 100 to acquire a Web page in the session.

The session management part 210 is a virtual software block executed by the CPU under program control, and manages the collaborative session by the terminals 100. Specifically, it creates a cache table 211 for each user and manages the session in a UAI table 212. Then, when multiple users join a session, a pointer in the UAI table 212 to the cache table 211 is updated so that the users will use the same cache table 211. The cache table 211 and the UAI table 212 are stored in the storage device, and predetermined information is registered in the tables in response to user operations. Details of the cache table 211 and the UAI table 212 will be described later.

The HTTP send/receive control part 220 is a virtual software block executed by the CPU under program control. It controls the network interface of the computer implementing the collaboration server 200 to acquire a Web page from the predetermined Web server 300 in response to requests from the terminals 100 and to return it to the requesting terminals 100. When honoring requests for a Web page registered in the cache table 211, the HTTP send/receive control part 220 returns the cached Web page to the requesting terminals 100.

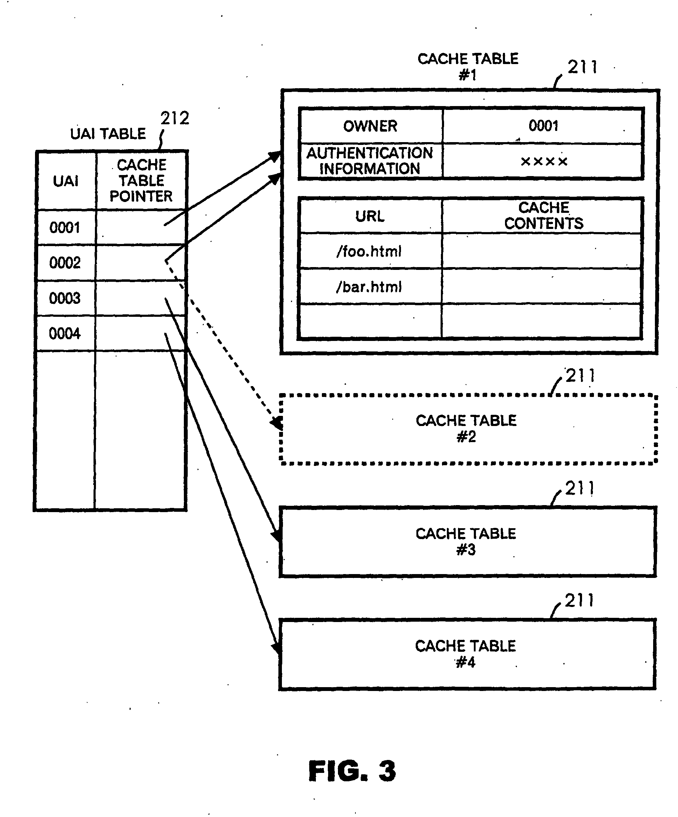

Fig. 3 is an illustration showing the structures of the cache tables 211 and UAI table 212 used for session management by the session management part 210.

The cache tables 211 are created on a user basis. In each cache table 211, a Web page acquired and cached based on operations by the user concerned is registered in association with its URL (Uniform Resource Locator). In a certain session, when receiving a request from a certain terminal 100 for a URL registered in the cache table 211, the collaboration server 200 returns the cached Web page to the terminal 100 based on the cache table 211.

Also registered in the cache table 211 is authentication information indicating access authorization of a session owner (user initiating the session) to the Web page. As will be described in detail later, use of the authentication information registered in the cache table 211 enables all the users participating in the session to access the Web page based on the access authorization of the session owner during only the session.

Registered in the UAI table 212 are ID information identifying each user to participate in the session and a pointer to the cache table 211 for the session in which the user is participating. In the embodiment, a cookie, IBMCF_UAI (hereinbelow, abbreviated to "UAI"), is used as the user ID information. For users participating in a certain session, a pointer to the cache table 211 given to (associated with) the owner of the session in which the users participate is registered. Thus, one cache table 211 is shared among participants in one session.

When a user participating in a certain session withdraws from the session, the pointer to the cache table 211 used in the session is erased from the entry of the user in the UAI table 212. Then, a new cache table 211 for the user as a new session owner may be created as required, and in such a case, a pointer to the new cache table 211 is registered in the entry of the UAI table 212. Examples of initiation of a session, execution of tasks, and termination of the session in normal course of collaborative activities will now be described. It is assumed here that the number of users is two, customer and agent, and the session initiates with a request from the customer. It is further assumed that, though multiple agents exist, only one of the agents participates in the session with the customer.

In the initial state, the terminal 100b of each agent has already been logged in the collaboration server 200.

At first, the customer operates the customer terminal 100a to log in to the collaboration server 200. At this time, the session management part 210 of the collaboration server 200 sets a UAI identifying the user (customer), registers the UAI information (UAI [0001] here) set for the customer in the UAI table 212, and creates a cache table 211. A client program is transferred, when required, from the collaboration server 200 to the customer terminal 100a.

Note that the aforementioned operations have already been completed for the agent and the agent terminal 100b.

Suppose next that a collaborative session-initiating request is sent from the customer terminal 100a to the collaboration server 200. Upon receipt of the request, the session management part 210 of the collaboration server 200 allocates an agent as the working partner for the session, and initiates the session. The agent as the partner may be allocated as designated by the customer, or as appropriately selected from among the agents available for the session (for example, the agents not participating in any other session) at the time when the session-initiating request is made.

With the agent allocated to the customer, the cache table pointer in the entry of the agent (UAI [0002] here) in the UAI table 212 is updated to point the cache table 211 for the customer. In this case, its original cache table 211 is deleted, so that the agent and the customer share the one cache table 211 in this session.

Then, suppose that an acquisition request for a Web page with a certain URL is sent from the task execution part 110a of the customer terminal 100a to the collaboration server 200. Upon receipt of the request, the HTTP send/receive control part 220 of the collaboration server 200 accesses the Web server 300 corresponding to the URL to acquire the Web page requested by the acquisition request. The Web page acquired is cached in the storage device of the collaboration server 200, and registered in the cache table 211. The cached Web page is then returned to the customer terminal 100a.

When the Web page requested by the customer terminal 100a is acquired (that is, when the task execution part 110a displays the Web page on the display device), the collaboration control part 120a notifies the agent terminal 100b of the change of URL. This notification may be made through the collaboration server 200, or directly from the customer terminal 100a to the agent terminal 100b.

The collaboration control part 120b of the agent terminal 100b receiving this notification instructs the task execution part 110b to acquire the Web page at the URL as the destination based on the notification.

Then, when an acquisition request for the Web page with the URL is sent from the task execution part 110b of the agent terminal 100b to the collaboration server 200, since the Web page at the URL has already been cached, the HTTP send/receive-control part 220 returns the cached Web page to the agent terminal 100b.

The cached Web page is sent to the customer terminal 100a and the agent terminal 100b, rather than acquired from the Web server 300 every time. This is because, for example, when the contents or layout of the Web page is dynamically changed every time the acquisition request is honored or to suit each acquisition request sender, if the customer terminal 100a and the agent terminal 100b acquire the Web page at different times, its contents or layout could be made different to make the collaborative work impossible. In other words, the delivery of the same cached Web page to both the customer terminal 100a and the agent terminal 100b ensures that the work can be done on the Web page with the same contents and layout.

The aforementioned operations also apply to a case where a given Web page in progress in the session is changed to another Web page (URL). The same goes for change of URL from the agent side. In this case, a Web page URL acquired by the agent terminal 100b is notified to the customer terminal 100a so that both will acquire the same cached Web page.

When the agent withdraws from the session, a new cache table 211 is created, and the cache table pointer in the entry of the agent ([0002] in Fig. 3) in the UAI table 212 is updated to point the newly-created cache table 211 (Cache Table #2 in Fig. 3). On the other hand, when the customer as the session owner withdraws from the session, a new cache table 211 is created, and the cache table pointer in the entry of the agent in the UAI table 212 is updated in the same manner to point its own cache table 211. Thus, since the customer takes over the existing cache table 211, the authentication information stored there can never be used by anyone else.

Let us assume next that a change to a URL of a Web page (contents), the access to which is restricted to only the customer, is made in the above-mentioned session by the customer and the agent.

In this case, if the customer has made the URL change ahead of the agent, since having permission to access the Web page concerned, the customer can acquire the Web page without any problem. The agent can also acquire the Web page cached in the collaboration server 200, thereby conducting a session on the Web page.

On the other hand, if the agent has made the URL change ahead of the customer, since the agent does not have permission to access the Web page, the collaboration server 200 cannot acquire the Web page from the Web server 300. It makes it impossible to conduct a session on the Web page.

In such a case, the collaboration system according to the embodiment acquires the Web page using the customer's authentication information acquired from the customer terminal 100a. The following provides a specific description.

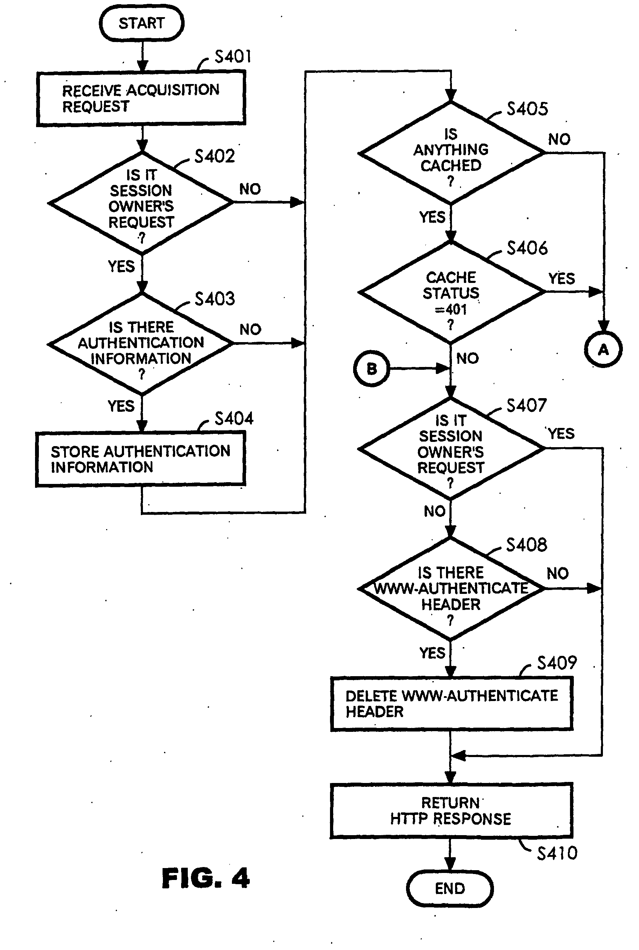

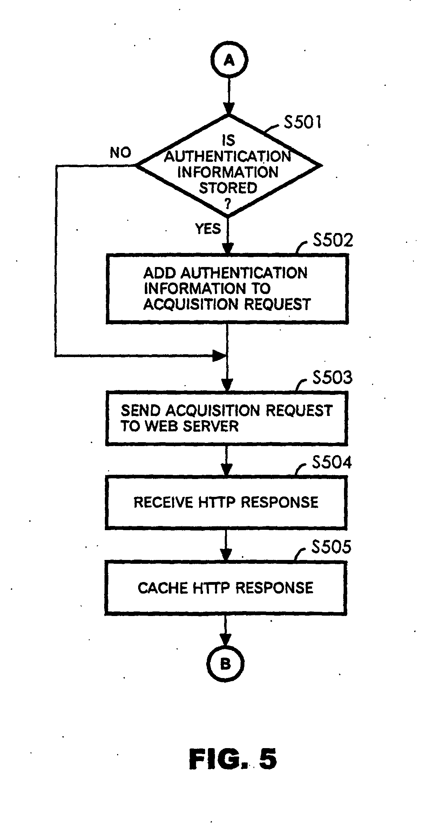

Figs. 4 and 5 are flowcharts for explaining the operation of the collaboration server 200 in the embodiment.

As shown in Figs. 4 and 5, when receiving an acquisition request (HTTP request) for a Web page from a certain terminal 100 (step 401), the HTTP send/receive control part 220 of the collaboration server 200 checks whether the acquisition request has been issued from a session owner (step 402). When it is from the session owner, the HTTP send/receive control part 220 then checks whether authentication information (Authorization header) is included in the acquisition request (step 403).

When the authentication information is included in the acquisition request from the session owner, the HTTP send/receive control part 220 stores the authentication information in the storage device (step 404), and refers to the UAI table 212 and the cache table 211 to check whether an URL specified by the acquisition request is registered (step 405). On the other hand, when the acquisition request is not from the session owner, or when the authentication information is not included in the acquisition request from the session owner, the HTTP send/receive control part 220 checks whether the URL specified by the acquisition request is registered in the cache table 211 (steps 402, 403, and 405). If the URL is registered in the cache table 211, the HTTP send/receive control part 220 checks whether the contents of an HTTP response cached in association with the URL is a status code 401, that is, whether the contents indicate that there is no access permission (step 406).

When the HTTP response cached is not the status code 401, the cached contents are regarded as the Web page requested by the acquisition request. Therefore, the HTTP send/receive control part 220 checks whether the acquisition request is from the session owner, and if it is from the session owner, it returns the Web page (HTTP response) to the terminal 100 (steps 407 and 410).

When the acquisition request is not from the session owner, the HTTP send/receive control part 220 checks whether there is a WWW-Authenticate header in the HTTP response cached (steps 407 and 408). Since it is determined at step 406 that the HTTP response is not the status code 401, there is no WWW-Authenticate header by definition. Therefore, the HTTP send/receive control part 220 returns the Web page (HTTP response) to the terminal 100 (step 410).

When it is determined at step 405 that the URL specified by the acquisition request is not registered in the cache table 211, and at step 406 that the HTTP response cached is the status code 401, since the Web page requested by the acquisition request has not been cached yet, the procedure goes to processing (Fig. 5) for acquiring the Web page from the Web server 300.

First, the HTTP send/receive control part 220 checks whether the authentication information on the session owner is stored in the storage device, and if stored, adds the authentication information to the acquisition request from the terminal 100 (steps 501 and 502). Then the HTTP send/receive control part 220 sends the acquisition request to the Web server 300 corresponding to the URL specified by the acquisition request (step 503), and receives the HTTP response from the Web server 300 to cache the same (steps 504 and 505). The HTTP response acquired at this time is either the Web page requested by the acquisition request or the status code 401 indicating that the acquisition request is not based on the access authorization to the Web page. In the latter case, the HTTP response includes the WWW-Authenticate header that requests input of authentication information indicative of the access authorization to the Web page.

Then, the HTTP send/receive control part 220 checks whether the acquisition request has been issued from the session owner, and if it is from the session owner, returns the HTTP response cached at step 505 to the terminal 100 (steps 407 and 410 in Fig. 4).

When the acquisition request is not from the session owner, the HTTP send/receive control part 220 checks whether there is the WWW-Authenticate header in the HTTP response cached (steps 407 and 408). If there is no WWW-Authenticate header, since the HTTP response is regarded as the Web page requested by the acquisition request, the HTTP send/receive control part 220 returns the Web page (HTTP response) to the terminal 100 (step 410).

On the other hand, if the WWW-Authenticate header exists, the HTTP response is regarded as the status code 401. In this regard, since any user other than the session owner has no access permission to the Web page and cannot return the authentication information, the HTTP send/receive control part 220 deletes the WWW-Authenticate header that requests input of the authentication information (step 409) and returns the HTTP response to the terminal 100 (step 410).

The following provides a detailed description of how the customer (UAI [0001]) and the agent (UAI [0002]) works on a Web page, the access to which is restricted to only the customer, in a collaboration session under the control of the collaboration server 200 operating in the manner mentioned above.

### <Operation Example 1>

First, the description will be made of the operation when the customer accesses an access-controlled Web page ahead of the agent. It is assumed here that the customer accesses URLs /protected/foo.html and /protected/bar.html as the access-controlled Web pages to which access is permitted with the same authentication information (user ID and password).

Suppose that an acquisition request for the Web page at /protected/foo.html (GET /protected/foo.html) is sent from the task execution part 110a of the customer terminal 100a to the collaboration server 200. The Authorization header as the authentication information is not included in this acquisition request (access request without authentication information). Since the corresponding Web page has not been cached up to this time, the acquisition request is sent from the collaboration server 200 to the Web server 300 (see steps 401 to 405, 501, and 503 in Figs. 4 and 5). Then, since no authentication information is included in the acquisition request, the HTTP response with the status code 401 is returned from the Web server 300 to the collaboration server 200 (see step 504). The HTTP response includes the WWW-Authenticate header that requests input of the authentication information.

The HTTP response is cached in the storage device of the collaboration server 200, and sent to the customer terminal 100a (see steps 505, 407, and 410).

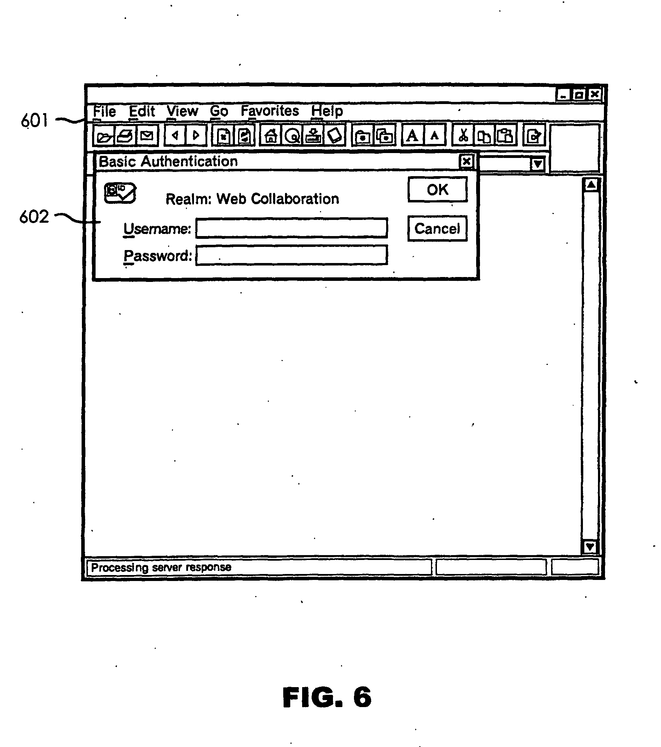

The customer terminal 100a that has received the HTTP response displays on the screen of the display device an input field box requesting input of user ID and password based on the WWW-Authenticate header. Fig. 6 shows an example of the display screen on the customer terminal 100a. In Fig. 6, an input field box 602 is displayed on a browser window 601 displayed by the task execution part 110a.

The customer enters user ID and password, and confirms them (by pressing the OK button) to send the collaboration server 200 an acquisition request with authentication information (Authorization header) including the user ID and password so as to acquire the Web page at /protected/foo.html (access request with authentication information).

The collaboration server 200 extracts the authentication information included in the acquisition request received, and stores it in the storage device (see steps 401 to 404). Although the cache is searched again in response to the acquisition request, since the HTTP response with the status code 401 previously received has been cached up to this time, the acquisition request is forwarded from the collaboration server 200 to the Web server 300 (see steps 405, 406, 501, and 503). Since the authentication information is included in the acquisition request this time, the required Web page is returned from the Web server 300 to the collaboration server 200 (see step 504) .

The Web page acquired is cached in the storage device of the collaboration server 200, and sent to the customer terminal 100a (see steps 505, 407, and 410).

If both or either of the user ID and password in the authentication information are wrong, since the HTTP response with the status code 401 is returned again, the customer must start over from the step of inputting user ID and password.

When the customer terminal 100a acquires the Web page at /protected/foo.html, the collaboration control part 120a of the customer terminal 100a notifies the agent terminal 100b of a change of URL as the session target in the normal course of activities in a collaboration session. Upon receipt of this notification, the task execution part 110b of the agent terminal 100b sends the collaboration server 200 an acquisition request for the Web page at /protected/foo.html (GET /protected/foo.html). Although the acquisition request includes no Authorization header as authentication information, since the Web page acquired in response to the acquisition request from the customer terminal 100a has already been cached in the collaboration server 200, the Web page is returned to the agent terminal

### 100b (see steps 401 to 403, 405, 406, 407, 408, and 410).

Thus, since the customer terminal 100a and the agent terminal 100b have acquired the same Web page cached in the collaboration server 200, they can conduct a session on the Web page.

Suppose next that an acquisition request for another Web page at /protected/bar.html (GET /protected/bar.html) is sent from the task execution part 110b of the agent terminal 100b to the collaboration server 200. The URL /protected/bar.html is a Web page accessible with the same authentication information as the URL /protected/foo.html. Since the corresponding Web page has not been cached yet up to this time, it is acquired from the Web server 300.

The acquisition request sent from the agent terminal 100b includes no Authorization header as authentication information to access the Web page at /protected/bar.html. However, since the Authorization header extracted from the previous acquisition request from the customer terminal 100a is stored in the collaboration server 200 (see Fig. 3), the stored Authorization header is added to the acquisition request and sent from the collaboration server 200 to the Web server 300 (see steps 401 to 403, 405, and 501 to 503).

In this case, since the authentication information is included in the acquisition request, the required Web page is returned from the Web server 300 to the collaboration server 200 (see step 504). The Web page is cached in the storage device of the collaboration server 200, and sent to the agent terminal 100b (see steps 505, 407, 408, and 410).

When the agent terminal 100b acquires the Web page at /protected/bar.html, the collaboration control part 120b of the agent terminal 100b notifies the customer terminal 100a of a change of URL as the session target in the normal course of activities in a collaboration session. Then the customer terminal 100a acquires the Web page at /protected/bar.html in the same manner as the agent terminal 100b acquired the Web page at /protected/foo.html as mentioned above.

Thus, since the customer terminal 100a and the agent terminal 100b have acquired the same Web page cached in the collaboration server 200, they can conduct a session on the Web page.

### <Operation Example 2>

Next, the description will be made of the operation when the agent accesses an access-controlled Web page ahead of the customer.

Suppose that an acquisition request for the Web page at /protected/foo.html (GET /protected/foo.html) is sent from the task execution part 110b of the agent terminal 100b to the collaboration server 200. The Authorization header as the authentication information is not included in this acquisition request. Since the corresponding Web page has not been cached up to this time, the acquisition request is sent from the collaboration server 200 to the Web server 300 (see steps 401 to 405, 501, and 503). Then, since no authentication information is included in the acquisition request, the HTTP response with the status code 401 is returned from the Web server 300 to the collaboration server 200 (see step 504). The HTTP response includes the WWW-Authenticate header that requests input of the authentication information.

The HTTP response is cached in the storage device of the collaboration server 200, and sent to the agent terminal 100b. In this case, since the agent terminal 100b is not the terminal of the session owner and is disabled from inputting the authentication information, the WWW-Authenticate header is deleted (see steps 505, and 407 to 410).

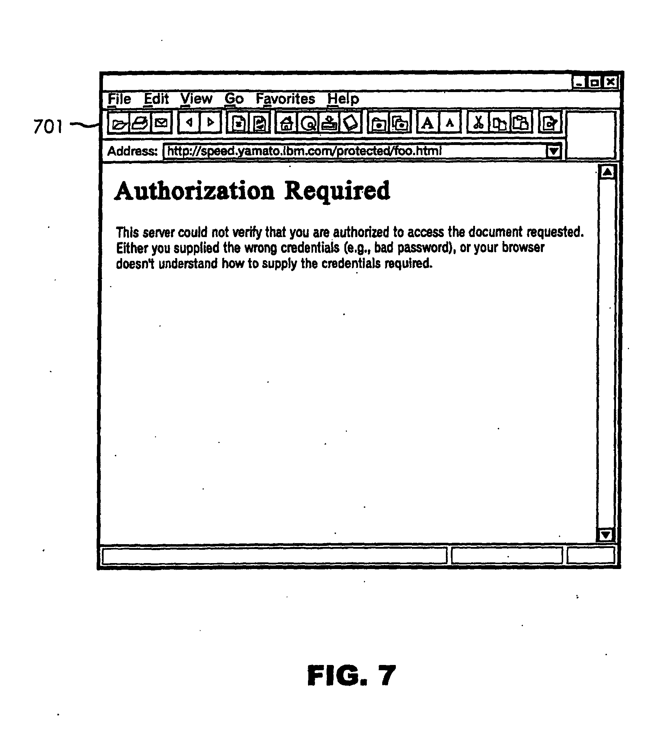

The agent terminal 100b that has received the HTTP response displays on its display device a screen notifying the agent that the agent terminal is not authorized to access. Fig. 7 shows an example of the display screen on the agent terminal 100b. In Fig. 7, only a message indicating that access restriction is imposed is displayed without displaying an input field box on a browser window 701 displayed by the task execution part 110b.

When the agent terminal 100b receives the HTTP response with the status code 401, the collaboration control part 120b of the agent terminal 100b notifies the customer terminal 100a of a change of URL as the session target in the normal course of activities in a collaboration session. Upon receipt of this notification, the task execution part 110a of the customer terminal 100a sends the collaboration server 200 an acquisition request for the Web page at /protected/foo.html (GET /protected/foo.html). The acquisition request does not include the Authorization header as authentication information (see steps 401 to 404).

In the collaboration server 200, although the cache is searched again in response to the acquisition request, since the HTTP response with the status code 401 previously received has been cached up to this time, the acquisition request is forwarded from the collaboration server 200 to the Web server 300 (see steps 405, 406, 501, and 503). Since the authentication information is not included in the acquisition request, the HTTP response with the status code 401 is returned from the Web server 300 to the collaboration server 200 (see step 504). This HTTP response includes the WWW-Authenticate header that requests input of the authentication information.

The HTTP response is cached in the storage device of the collaboration server 200, and sent to the customer terminal 100a (see step. 505, 407, and 410). Thus, as shown in Fig. 6, the screen requesting input of customer's user ID and password is displayed on the display device of the customer terminal 100a. Then, in response to the HTTP response, an acquisition request with authentication information (Authorization header) including the customer ID and password to acquire the Web page at /protected/foo.html is sent from the customer terminal 100a to the collaboration server 200.

The collaboration server 200 extracts the authentication information included in the acquisition request received, and stores it in the storage device (see steps 401 to 404). Although the cache is searched again in response to the acquisition request, since the HTTP response with the status code 401 previously received has been cached up to this time, the acquisition request is forwarded from the collaboration server 200 to the Web server 300 (see steps 405, 406, 501, and 503). Since the authentication information is included in the acquisition request this time, the required Web page is returned from the Web server 300 to the collaboration server 200 (see step 504).

The Web page acquired is cached in the storage device of the collaboration server 200, and sent to the customer terminal 100a (see steps 505, 407, and 410).

If both or either of the user ID and password in the authentication information are wrong, since the HTTP response with the status code 401 is returned again, the customer must start over from the step of inputting user ID and password.

Up to this time, the agent terminal 100b has already received the HTTP response for the URL /protected/foo.html, and the collaboration control part 120 of each terminal 100 recognizes that the URL has been synchronized between each other. But the fact is that the HTTP response received by the agent terminal 100b is the status code 401, not the target Web page. If this state continues, the session will not start. It is therefore necessary for the agent terminal 100b to resend the acquisition request for the Web page and acquire the Web page cached in the collaboration server 200 so as to synchronize the URL between the agent and customer terminals.

In the aforementioned process, the customer authentication information is stored in the collaboration server 200. From then on, even when the agent terminal 100b sends the acquisition request ahead of the customer terminal 100a, the agent terminal 100b can acquire any Web page accessible with the authentication information.

Once the authentication information has been stored in the collaboration server 200, even if the customer terminal 100a accesses the URL /protected/foo.html again or the URL /protected/bar.html, the authentication information stored can be used without the need for the customer to reenter the user ID and password.

As described above and according to the embodiment, authentication information acquired when a session owner has accessed a resource, the access of which is restricted to only the session owner, is stored in the collaboration server 200. It makes possible access from another user participating in the session using the authentication information or access authorization of the session owner (see the case of /protected/bar.html in Operation Example 1).

Even when another user accesses such an access-controlled resource ahead of the session owner, since the session owner immediately initiates access for URL synchronization with the user concerned, the user can acquire the resource merely by resending the access request (Operation Example 2). This means that the user has the session owner access the resource to use the access authorization of the session owner.

The aforementioned operation examples assumed that both of the Web pages at /protected/foo.html and /protected/bar.html are accessible with the same authentication information. On the other hand, if a session is conducted by accessing Web pages at /protectedl/foo.html and /protected2/bar.html existing in different access-controlled directories, since access control is generally performed on a directory basis, different user IDs and passwords may be required to access these Web pages. In this case, the session owner accesses each Web page to let another user acquire the resource. It is therefore necessary for the collaboration server 200 to prepare and manage a table or the like in which each piece of authentication information is associated with a directory accessible with the authentication information.

As described above, in Operation Example 2, when the session owner has acquired a resource, the URL is synchronized but the contents of the display screen are different between the session owner's terminal 100 and another user terminal 100. In other words, the target Web page is displayed on the session owner's terminal 100 and a message screen (see Fig. 7) based on the status code 401 is displayed on another user terminal 100. In the operation for URL synchronization provided by normal collaboration, since the URL has already been shared, another user terminal 100 cannot automatically acquire the target Web page again. Therefore, the aforementioned embodiment is such that the Web page is synchronized only when the acquisition request is resent from another user terminal 100 (agent terminal 100b).

Alternatively, the functionality or other features of the collaboration control part 120 may be extended, though processing becomes complicated. The extension is made so that the layout or the like of the screen displayed on each terminal 100 is compared with the other, and when they do not match, the terminal 100 other than the session owner is controlled to resend the acquisition request for the Web page. It enables automatic synchronization of both screens.

The above description assumed that the user (session owner) initiating the collaboration session has the access permission. However, since each participant in a session is specified from the UAI table 212 in which the terminal 100 used by each user or participant is listed, access authorization can be given to the terminal 100 (session owner's terminal) in each session. In this case, when an access request for a certain resource is made from an unauthorized terminal 100, the collaboration server 200 uses access authorization of another terminal 100 to acquire the resource and return it to each terminal 100.

As described above and according to the invention, access control can be realized in the collaboration system in which, even when only particular one of users working together has access permission to a resource, the other users are allowed to access the resource under certain conditions.

## Claims

1. A collaboration server for supporting collaborative work by multiple terminals exchanging data through a network, comprising:
resource acquiring means for acquiring a resource in response to requests from the terminals and returning it to the requesting terminals; and
session management means for managing a collaborative work session by the terminals, wherein
when receiving in a certain session an acquisition request from any user terminal other than that of a session owner to acquire a resource, the access to which is authorized to only the session owner, said resource acquiring means acquires the resource based on the access authorization of the session owner.

2. The collaboration server according to claim 1,
wherein said resource acquiring means acquires the resource by adding information, indicative of the access authorization acquired from an access request from the session owner's terminal, to the resource acquiring request from the user terminal other than that of the session owner.

3. The collaboration server according to claim 1,
wherein when receiving the resource acquiring request for the resource from the user terminal other than that of the session owner, said resource acquiring means acquires the resource by letting the session owner's terminal make an access request for the resource.

4. A collaboration server for supporting collaborative work by multiple terminals exchanging data through a network, comprising:
resource acquiring means for acquiring a resource in response to requests from the terminals and returning it to the requesting terminals; and
session management means for managing a collaborative work session by the terminals, wherein
when receiving in a certain session an access request for an access-controlled resource without authentication information, said resource acquiring means acquires the resource based on information indicating access authorization acquired from another access request for the resource with authentication information.

5. A collaboration server for supporting collaborative work by multiple terminals exchanging data through a network, comprising:
a send/receive controller for acquiring a resource in response to requests from the terminals and returning it to the resource requesting terminals; and
a session manager for managing a collaborative work session by the terminals, wherein
when authentication information indicating access authorization is included in an acquisition request from a certain terminal for a particular resource, said send/receive controller stores the authentication information in a predetermined storage device, and when no authentication information is included in an acquisition request from another certain terminal for the resource, said send/receive controller adds the stored authentication information to the acquisition request concerned and sends it to a resource server.

6. The collaboration server according to claim 5,
wherein said send/receive controller acquires the authentication information from the acquisition request received from a session owner in the session, and stores the authentication information in the predetermined storage device.

7. The collaboration server according to claim 6,
wherein when receiving an acquisition request from any user terminal other than that of the session owner in such a condition that no authentication information is stored, said send/receive controller removes an input request for the authentication information from a response to the acquisition request.

8. A collaboration system comprising:
multiple terminals exchanging data through a network to perform collaborative work; and
a collaboration server that acquires a resource in response to requests from the terminals and sends it to each terminal, wherein
when receiving in a certain session a request to access an access-controlled resource from a terminal not having access permission to the resource, said collaboration server acquires the resource using access authorization of another terminal to the resource.

9. The collaboration system according to claim 8,
wherein when receiving the request to access the access-controlled resource from the terminal not having access permission to the resource, said collaboration server acquires the resource by letting another terminal having access permission to the resource make an access request for the resource.

10. A session management method for a collaboration server for supporting collaborative work by multiple terminals exchanging data through a network, comprising the steps of:
adding prestored authentication information to an acquisition request for a particular resource from a certain terminal when no authentication information indicating access authorization to the resource is included in the acquisition request;
sending a target resource server the received acquisition request or authentication information-added acquisition request and acquiring a response; and
returning the acquired response to the terminal as the sender of the acquisition request.

11. The session management method according to claim 10 further comprising a step of acquiring authentication information from an acquisition request received from the terminal of a session owner in the collaborative work session and storing it in a predetermined storage device.

12. The session management method according to claim 10 further comprising a step of removing an input request for information indicating access authorization to the resource from the response prior to returning the response when the contents of the response contain information indicating that the resource is access-controlled.

13. A program for controlling a computer to support collaborative work by multiple terminals exchanging data through a network and execute:
processing for adding prestored authentication information to an acquisition request for a particular resource from a certain terminal when no authentication information indicating access authorization to the resource is included in the acquisition request;
processing for sending a target resource server the received acquisition request or authentication information-added acquisition request and acquiring a response; and
processing for returning the acquired response to the terminal as the sender of the acquisition request.

14. The program according to claim 13 wherein the computer is further controlled to execute processing for acquiring authentication information from an acquisition request received from the terminal of a session owner in the collaborative work session and storing it in a predetermined storage device.

15. The program according to claim 13 wherein the computer is further controlled to execute processing for removing an input request for information indicating access authorization to the resource from the response prior to returning the response when the contents of the response contain information indicating that the resource is access-controlled.
